# EUROPÄISCHE PATENTSCHRIFT

(11) **EP 3 292 510 B1**
(45) Veröffentlichungstag und Bekanntmachung des Hinweises auf die Patenterteilung: **07.07.2021**
(21) Anmeldenummer: 16726768.1
(22) Anmeldetag: 04.05.2016
(51) Int. Cl.: G06K 9/00, G06K 9/46

(54) **VERFAHREN UND VORRICHTUNG ZUR ERKENNUNG UND BEWERTUNG VON FAHRBAHNREFLEXIONEN**
METHOD AND APPARATUS FOR DETECTING AND ASSESSING ROAD REFLECTIONS
PROCÉDÉ ET DISPOSITIF POUR IDENTIFIER ET ÉVALUER DES RÉFLEXIONS SUR UNE VOIE DE CIRCULATION

(30) Priorität: 06.05.2015 DE 102015208429
(43) Veröffentlichungstag der Anmeldung: 14.03.2018
(73) Patentinhaber: Continental Teves AG & Co. OHG, 60488 Frankfurt am Main (DE)
(72) Erfinder: FRITZ, Stefan, 64390 Erzhausen (DE); HARTMANN, Bernd, 61350 Bad Homburg (DE); AMTHOR, Manuel, 07745 Jena (DE); DENZLER, Joachim, 07743 Jena (DE)
(74) Vertreter: Continental Corporation
(86) Internationale Anmeldenummer: PCT/DE2016/200207
(87) Internationale Veröffentlichungsnummer: WO 2016/177371

(56) Entgegenhaltungen:
- EP-A2- 2 551 794
- WO-A2-2004/081897
- JP-A- 2003 057 168
- US-A1- 2002 191 837
- AMTHOR MANUEL ET AL: "Road Condition Estimation Based on Spatio-Temporal Reflection Models", 3. November 2015 (2015-11-03), CORRECT SYSTEM DESIGN; [LECTURE NOTES IN COMPUTER SCIENCE; LECT.NOTES COMPUTER], SPRINGER INTERNATIONAL PUBLISHING, CHAM, PAGE(S) 3 - 15, XP047333260, ISSN: 0302-9743 ISBN: 978-3-642-36616-1 [gefunden am 2015-11-03] Absätze 1, 3 und 4
- FUJIMURA K ET AL: "Road surface sensor", FUJITSU TEN GIHO - FUJITSU TEN TECHNICAL REPORT, FUJITSU TEN KAKUSHIKI GAISHA, KOBE, JP , Nr. 1 1. Februar 1988 (1988-02-01), Seiten 64-72, XP002688511, ISSN: 0289-3789 Gefunden im Internet: URL:http://www.fujitsu-ten.com/business/te chnicaljournal/pdf/1-6E.pdf [gefunden am 2012-12-04]
- SHOHEI KAWAI ET AL: "A method to distinguish road surface conditions for car-mounted camera images at night-time", ITS TELECOMMUNICATIONS (ITST), 2012 12TH INTERNATIONAL CONFERENCE ON, IEEE, 5. November 2012 (2012-11-05), Seiten 668-672, XP032327884, DOI: 10.1109/ITST.2012.6425265 ISBN: 978-1-4673-3071-8

## Beschreibung

### Gebiet der Erfindung

Die Erfindung betrifft ein Verfahren zur Erkennung und Bewertung von Reflexionen auf einer Fahrbahn. Weiterhin betrifft die Erfindung eine Vorrichtung zur Durchführung des vorgenannten Verfahrens und ein Fahrzeug mit einer solchen Vorrichtung.

### Hintergrund der Erfindung

Der technologische Fortschritt im Bereich der optischen Bilderfassung erlaubt den Einsatz von kamerabasierten Fahrerassistenzsystemen, die hinter der Windschutzscheibe platziert der visuellen Wahrnehmung des Fahrers entsprechend das Vorfeld des Fahrzeugs erfassen. Die funktionalen Umfänge dieser Systeme erstrecken sich dabei von der Fernlichtautomatik über Erkennung und Anzeige von Geschwindigkeitsbegrenzungen bis hin zur Warnung bei Spurhaltefehlern oder drohender Kollision.

Ausgehend von der reinen Vorfelderfassung bis hin zum vollständigen 360° Rundumblick sind heute Kameras in vielfältigen Applikationen und unterschiedlichen Funktionen für Fahrerassistenzsysteme in modernen Fahrzeugen zu finden. Aufgabe der digitalen Bildverarbeitung als Stand-alone Funktion oder in Fusion mit Radar- oder Lidarsensoren ist es dabei primär Objekte zu erkennen, zu klassifizieren und im Bildausschnitt zu verfolgen. Klassische Objekte sind in der Regel verschiedenste Fahrzeuge wie PKW, LKW, Zweiräder oder Fußgänger. Darüber hinaus übernehmen Kameras die Erfassung von Schildern, Fahrspurmarkierungen, Leitplanken, Freiräumen oder sonstigen generischen Objekten.

Das automatische Erlernen und Erkennen von Objektkategorien und deren Instanzen gehört zu den wichtigsten Aufgaben der digitalen Bildverarbeitung und stellt den aktuellen Stand der Technik dar. Aufgrund der aktuell sehr weit fortgeschrittenen Verfahren, die diese Aufgaben beinahe so gut wie ein Mensch erfüllen können, hat sich inzwischen der Schwerpunkt von einer groben auf eine genaue Lokalisierung der Objekte verlagert.

Die WO 2004/081897 A2 lehrt ein Straßenoberflächeneigenschafts-Erkennungsgerät für ein Fahrzeug. Das Straßenoberflächeneigenschafts-Erkennungsgerät weist eine GPS-Einheit auf, welche eine Eingabe von einem drahtlosen Receiver empfängt. Weiterhin zeigt das Straßenoberflächeneigenschafts-Erkennungsgerät ein Ergebnis an, welches von einem Fahrzeugfahrer basierend auf der empfangenen Eingabe wahrgenommen werden kann.

Weiterhin zeigt die EP 2 551 794 A2 ein Bordsystem zur Erkennung einer äußeren Umwelt eines Fahrzeugs, wobei Reflexionen einer Straßenoberfläche ausgewertet werden.

Aus der US 2002/191837 A1 ist ferner ein Hindernis-Erkennungssystem für ein Fahrzeug bekannt, wobei das Hindernis-Erkennungssystem Ähnlichkeiten zwischen Bildern zweier Kameras nach Durchführen einer Bildtransformation berechnet.

Außerdem offenbart die JP 2003 057168 A ein Straßenoberflächen-Erkennungsgerät für ein Motorfahrzeug, wobei das Straßenoberflächen-Erkennungsgerät einen Straßenoberflächen-Status basierend auf einer räumlichen Frequenzverteilung von Bilddaten diskriminiert, welche von oberhalb der Straße angeordnete CCD-Kameras erhalten worden sind.

Im Bereich moderner Fahrerassistenz werden unterschiedliche Sensoren u.a. auch Videokameras eingesetzt um das Fahrzeugumfeld möglichst genau und robust zu erfassen. Diese Umfeldinformationen zusammen mit den fahrdynamischen Informationen des Fahrzeugs über z.B. die Inertialsensorik verschaffen einen guten Eindruck über den aktuellen Fahrzustand des Fahrzeugs und die gesamte Fahrsituation. Daraus lässt sich die Kritikalität von Fahrsituationen ableiten und die entsprechenden Fahrerinformationen/-warnungen bis hin zu fahrdynamischen Eingriffen über Bremse und Lenkung initiieren.

Da der zur Verfügung stehende Reibbeiwert oder Fahrbahnzustand für Fahrerassistenzsysteme jedoch nicht zur Verfügung steht bzw. nicht benannt werden kann, erfolgt die Auslegung der Warn- und Eingriffszeitpunkte grundsätzlich auf Basis einer trockenen Fahrbahn mit hohem Kraftschlusspotential zwischen Reifen und Fahrbahn. Daraus ergibt sich das Problem, dass die Fahrerwarnung bzw. der systemseitige Eingriff bei unfallvermeidenden oder unfallabschwächenden Systemen so spät erfolgt, dass es bei tatsächlich trockener Fahrbahn gerade noch zur Unfallvermeidung oder zur akzeptablen Unfallfolgenminderung reicht. Ist die Fahrbahn bei Nässe, Schnee oder gar Eis jedoch weniger griffig, kann der Unfall nicht mehr verhindert werden und auch die Minderung der Unfallfolgen erzielt nicht den gewünschten Effekt.

### Zusammenfassung der Erfindung

Die Aufgabe der vorliegenden Erfindung kann daher darin bestehen, ein Verfahren und eine Vorrichtung der eingangs genannten Art bereitzustellen, mit denen der Fahrbahnzustand oder gar der zur Verfügung stehende Reibbeiwert der Fahrbahn bestimmt werden kann, so dass Fahrerwarnungen sowie Systemeingriffe entsprechend zielgerichteter erfolgen können und die Wirksamkeit von unfallvermeidenden Fahrerassistenzsystemen erhöht werden kann. Die Aufgabe wird gelöst durch die Gegenstände der unabhängigen Patentansprüche. Bevorzugte Ausführungsformen sind Gegenstand der abhängigen Ansprüche.

Das erfindungsgemäße Verfahren nach Anspruch 1 dient der Erkennung und Bewertung von Reflexionen wenigstens eines Punktes auf einer Fahrbahn.

Die Erfindung macht sich zu Nutze, dass sich Reflexionen im Allgemeinen in drei Kategorien einteilen lassen und jede bei Veränderung des Blickwinkels bzw. der Perspektive unterschiedliche visuelle Effekte hervorruft. Dabei wird zwischen diffuser, glänzender und spiegelnder Reflexion unterschieden, wobei in der vorliegenden Erfindung besonders der Unterschied zwischen diffuser Reflexion, welche ein Indikator für eine trockene Fahrbahn ist, und spiegelnder Reflexion, welche ein Indikator für eine nasse und/oder vereiste Fahrbahn ist, von Interesse ist. Auf diese Weise ermöglicht das erfindungsgemäße Verfahren das Unterscheiden von trockener und nasser/vereister Fahrbahn.

Das erfindungsgemäße Verfahren und die erfindungsgemäße Vorrichtung verwenden Algorithmen der digitalen Bildverarbeitung, mit dem Ziel Fahrbahnreflexionen zur Erkennung insbesondere von Nässe und Eis robust zu detektieren. Mit dem erfindungsgemäßen Verfahren lässt sich dabei durch die Erkennung und Bewertung von Reflexionen bereits eines einzigen Fahrbahnpunktes, welcher die Fahrbahn repräsentiert, ein Rückschluss auf einen aktuellen Fahrbahnzustand ziehen, indem in den von der Kamera aus zwei verschiedenen Perspektiven erzeugten Bildern des Fahrbahnpunktes durch Verwendung digitaler Bildverarbeitungsalgorithmen nach bestimmten Merkmalen gesucht wird, die es erlauben auf den aktuellen Fahrbahnzustand zu schließen.

Das Verfahren wird bevorzugt bei einer ausreichend beleuchteten Szene durchgeführt, welche die Erzeugung bzw. die Aufnahme verwertbarer Bilder ermöglichen. Voraussetzung für das Verfahren ist eine Veränderung der Perspektive in einer Bildsequenz von mindestens zwei Bildern. Im Falle von diffusen Reflexionen (Indikator für eine trockene Fahrbahn) hat die Veränderung des Blickwinkels auf einen Fixpunkt auf der Fahrbahn keinen visuellen Effekt, da das Licht in alle Richtung gleichermaßen reflektiert wird. Bei Veränderung der Perspektive ändert sich das Erscheinungsbild für den Betrachter nicht. Im Gegensatz dazu wird bei einer spiegelnden Reflexion (Indikator für eine nasse und/oder eine vereiste Fahrbahn) die Reflexion nicht gestreut zurück geworfen, was bei einer Veränderung des Blickwinkels eine starke Veränderung des Erscheinungsbildes eines Fixpunktes auf der Fahrbahn zur Konsequenz hat. Eine Veränderung der Perspektive hat zur Folge, dass Reflexionen in einem bestimmten Punkt auf der Fahrbahn nach der Veränderung nicht mehr den Betrachter treffen. Um diesen Effekt auszunutzen ist es prinzipiell nötig, vereinzelte oder alle Punkte oder Regionen im Bild über eine Sequenz von mindestens zwei Bildern zu verfolgen und deren Erscheinungsveränderung zu bewerten.

Das erfindungsgemäße Verfahren findet bevorzugt in einem Fahrzeug Anwendung. Das Bereitstellen der Kamera kann dabei insbesondere innerhalb des Fahrzeugs erfolgen, vorzugsweise hinter der Windschutzscheibe, so dass einer visuellen Wahrnehmung eines Fahrers des Fahrzeugs entsprechend das Vorfeld des Fahrzeugs erfasst werden kann. Die Erzeugung der Bilder aus zwei unterschiedlichen Perspektiven kann dabei insbesondere durch eine Fahrbewegung des Fahrzeugs erfolgen.

Bevorzugt wird eine Digitalkamera bereitgestellt, mit welcher die wenigstens zwei Erscheinungsbilder direkt digital aufgenommen und mittels Algorithmen digitaler Bildverarbeitung ausgewertet werden können.

Ein besonderer Vorteil des erfindungsgemäßen Verfahrens ist, dass spiegelnde Reflexionen sicher von Schatten (diffuse Reflexionen) unterschieden werden können, da sie ein unterschiedliches Bewegungsverhalten im Bild zeigen. Ebenfalls kann vorteilhaft vorgesehen sein, dass das Unterscheiden von diffuser und spiegelnder Reflexion auf Basis digitaler Bildverarbeitung durch Differenzieren von fahrbahnfesten und fahrbahnunabhängigen Erscheinungen verursacht durch eine Relativbewegung des Beobachters erfolgt und somit eine sichere Trennung von Schatten und gespiegelter Infrastruktur auf der Fahrbahn ermöglicht wird.

Eine vorteilhafte Ausführungsform des erfindungsgemäßen Verfahrens umfasst die zusätzlichen Verfahrensschritte Kommunizieren der Fahrbahnzustands-Information an ein Fahrerassistenzsystem eines Fahrzeugs und Anpassen von Warn- und Eingriffszeitpunkten mittels des Fahrerassistenzsystems in Abhängigkeit der Fahrbahnzustands-Information. Die Fahrbahn-Zustandsinformation dient somit als Eingang für ein unfallvermeidendes Fahrerassistenzsystem eines Fahrzeugs, um Warn- und Eingriffszeitpunkte des Fahrerassistenzsystems besonders effektiv anpassen zu können. Die Wirksamkeit von unfallvermeidenden Maßnahmen durch solche sogenannte Advanced Driver Assistance Systems (ADAS) kann dadurch deutlich erhöht werden.

Weiterhin ist auch vorteilhaft vorgesehen, dass die Fahrbahn-Zustandsinformation als wichtige Information der Fahrumgebung beim automatisieren dient und vorzugsweise einer entsprechende Systemsteuerung zum autonomen Fahren zugeführt wird. In diesem Sinne ist gemäß einer weiteren vorteilhaften Ausführungsform vorgesehen, dass die Fahrbahnzustands-Information in die Funktion eines automatisierten Fahrzeugs einbezogen wird und Fahrstrategie sowie Bestimmung von Übergabezeitpunkten zwischen einem Automaten und Fahrer in Abhängigkeit der Fahrbahnzustands-Information angepasst werden.

Eine weitere vorteilhafte Ausführungsform umfasst die zusätzlichen Verfahrensschritte Erzeugen zweier digitaler Bilder einer Vielzahl von Fahrbahnpunkten, welche vorzugsweise eine trapezförmige Region bilden, aus unterschiedlichen Perspektiven mittels der Kamera und Transformieren der vorzugsweise trapezförmigen Region mittels einer geschätzten Homographie in eine rechtwinklige Draufsicht. Gemäß dieser Ausführungsform wird zur Detektion von Fahrbahnreflexionen eine Region, welche aus einer Vielzahl von Fahrbahnpunkten umfasst, in den Bildern der Kamera verwendet, welche die Fahrbahn repräsentiert. Je nach Anforderung an Laufzeit und Genauigkeit kann die Region auch ein segmentierter Ausschnitt sein. Besonders bevorzugt ist jedoch eine Region in Form eines Trapezes, wobei die trapezförmige Region mit Hilfe einer geschätzten Homographie in eine rechtwinklige Draufsicht ("Bird's-eye view") transformiert wird. Mit Hilfe dieser Transformation können Merkmale extrahiert werden, die besonders dazu geeignet sind, die unterschiedliche Erscheinung in dieser Region in Abhängigkeit der Präsenz von Fahrbahnreflexionen zu erfassen.

Gemäß einer besonders bevorzugten Ausführungsform erfolgt das Bereitstellen der Kamera in einem Fahrzeug. Das erste Bild wird in einer ersten Position des Fahrzeugs aus einer ersten Aufnahme-Perspektive erzeugt. Das Fahrzeug wird in eine zweite Position bewegt, z.B. verfahren, wobei die zweite Position von der ersten Position unterschiedlich ist, d.h. die erste und die zweite Position stimmen nicht überein. Es folgt das Erzeugen des mindestens zweiten Bildes in der mindestens zweiten Position des Fahrzeugs aus einer mindestens zweiten Aufnahme-Perspektive. Die mindestens zwei Bilder der mindestens zwei unterschiedlichen Aufnahme-Perspektiven werden anschließend in eine jeweilige Draufsicht transformiert. Es folgt ein Registrieren der mindestens zwei erzeugten Draufsichten mit Mitteln der digitalen Bildverarbeitung unter Einbeziehung von Fahrdynamikparametern des Fahrzeugs und ein Vergleich der Erscheinungsbilder des wenigstens einen Fahrbahnpunktes in den mindestens zwei registrierten Draufsichten. Die Registrierung ist gemäß diesem Ausführungsbeispiel durch eine einfache Translation und Rotation realisierbar, da die Szene in eine Draufsicht transformiert wurde. Die Kompensation kann vorzugsweise durch Einbezug einzelner Fahrdynamikparameter, z.B. Fahrzeuggeschwindigkeit, Lenkwinkel, etc. oder ganzer Modelle, z.B. Groundplane-Modell und Fahrdynamik-Modelle erfolgen oder unterstützt werden. Der Vorteil der Verwendung dieser zusätzlichen Informationen zeigt sich speziell bei homogener oder stark spiegelnder Fahrbahn, bei der es zu Fehlinterpretation der Fahrzeugbewegung auf Basis reiner Bildverarbeitung kommen kann.

Weiterhin erfolgt vorteilhaft ein Extrahieren von Merkmalen des mindestens einen Fahrbahnpunktes oder der Region, welche die Veränderung des Erscheinungsbildes in den mindestens zwei registrierten Draufsichten erfassen. Dies ist vorteilhaft nach einem Zuordnen der Einzelpunkte oder Regionen einer Sequenz vorgesehen. Das Extrahieren kann auf unterschiedliche Weise geschehen, wie z.B. über deren Varianz oder Werteverlauf in Form eines Vektors.

Die einzelnen Merkmale bilden einen Merkmalsvektor, welcher anschließend von einem Klassifikationssystem (Klassifikator) mindestens einer Klasse zugewiesen. Vorzugsweise sind die Klassen "nass/vereist" und "trocken/Rest" vorgesehen. Ein Klassifikator ist dabei eine Abbildung eines Merkmalsdeskriptors auf eine diskrete Zahl, die die zu erkennenden Klassen repräsentiert.

Als Klassifikator wird vorzugsweise ein zufälliger Entscheidungswald (engl. Random Decision Forest) verwendet. Entscheidungsbäume sind hierarchisch angeordnete Klassifikatoren, die das Klassifikationsproblem iterativ aufspalten. Beginnend in der Wurzel wird auf Basis der getroffenen Entscheidungen der Pfad zu einem Blattknoten beschritten, in welchem die finale Klassifikationsentscheidung stattfindet. Aufgrund der Lernkomplexität werden vorzugsweise für die inneren Knoten sehr einfache Klassifikatoren, die sogenannten decision stumps verwendet, welche den Eingaberaum orthogonal zu einer Koordinatenachse separieren.

Entscheidungswälder sind Kollektionen von Entscheidungsbäumen, die an vorzugsweise zwei Stellen randomisierte Elemente beim Trainieren der Bäume enthalten. Als erstes wird jeder Baum mit einer zufälligen Auswahl an Trainingsdaten trainiert und zweitens für jede binäre Entscheidung nur eine zufällige Auswahl zulässiger Dimensionen verwendet. In den Blattknoten werden Klassenhistogramme gespeichert, die eine Maximum-Likelihood-Schätzung über die den Blattknoten im Training erreichenden Merkmalsvektoren erlauben. Klassenhistogramme speichern die Häufigkeit, mit der ein Merkmalsvektor eines bestimmten Fahrbahnzustands beim Durchlaufen des Entscheidungsbaumes den entsprechenden Blattknoten erreicht. Als Ergebnis kann jeder Klasse vorzugsweise eine Wahrscheinlichkeit zugeordnet werden, die sich aus den Klassenhistogrammen berechnet.

Um für einen Merkmalsvektor eine Entscheidung über die Präsenz von spiegelnden Reflexionen zu treffen, wird vorzugsweise die wahrscheinlichste Klasse aus dem Klassenhistogramm als der aktuelle Zustand verwendet, oder andere Methoden, um die Information aus den Entscheidungsbäumen in eine Reflexionspräsenzentscheidung zu übertragen.

An diese Entscheidung pro Eingabebild schließt sich bevorzugt eine Optimierung an. Diese Optimierung kann zeitlichen Kontext berücksichtigen oder weitere Information, die vom Fahrzeug zur Verfügung gestellt werden. Zeitlicher Kontext wird vorzugsweise dadurch berücksichtigt, dass die häufigste Klasse aus einem vorangegangenen Zeitabschnitt verwendet oder mittels eines sogenannten Hysterese-Schwellwertverfahrens bestimmt wird. Bei dem Hysterese-Schwellwertverfahren wird der Wechsel von einem Fahrbahnzustand in den anderen anhand von Schwellwerten geregelt. Ein Wechsel erfolgt erst dann, wenn die Wahrscheinlichkeit für den neuen Zustand hoch genug und für den alten Zustand dementsprechend gering ist.

Ist das vorstehend beschriebene Extrahieren für die Einzelpunkte oder Regionen geschehen, so ist es weiter möglich für einen gesamten Bildausschnitt eines der Bilder, insbesondere einen transformierten Bildausschnitt, Merkmale zu extrahieren. Dafür sind verschiedenste Berechnungen denkbar, wie beispielsweise die Konkatenation der Einzelpunktmerkmale mit eventuellen Dimensionsreduzierungsmaßnahmen (z.B. "Principal Component Analysis"), die Beschreibung mit Hilfe von statistischen Momenten oder auch ein "Bag-of-Visual-Words"-Ansatz, bei dem auf Basis eines Histogramms das Vorkommen bestimmter prototypischer Werte oder Wertetupel erfasst wird (z.B. SIFT, HOG, LBPs etc.).

Besonders bevorzugt erfolgt das Bewerten von Fahrbahnreflexionen anhand der oben beschriebenen Effekte mittels eines approximativer Ansatzes, durch welchen insbesondere die Robustheit des Verfahrens mit Bildregistrierung erhöht werden kann. Gleichzeitig lassen sich Laufzeiten reduzieren, was essentiell für den Automotive-Bereich ist. In diesem Sinne umfasst das erfindungsgemäße Verfahren, dass die mindestens zwei erzeugten Bilder, besonders bevorzugt die erzeugten Draufsichten, gemittelt werden, um ein Durchschnittsbild zu erhalten und dass eine absolute oder quadratische Differenz zwischen jedem Bildpunkt im Durchschnittsbild und dem zugehörigen Spaltenmittelwert gebildet wird. Eine Grundannahme dieser Ausführungsform ist, dass sich eine Region durch den gesamten Bildbereich bewegt. Betrachtet wird dabei nicht eine bestimmte Region an sich, sondern deren zurückgelegter Pfad. Somit werden besonders bevorzugt mehr als zwei Bilder erzeugt. Es wird weiterhin angenommen, dass eine geradlinige und stetige Veränderung der Perspektive vorliegt, vorzugsweise eine gleichmäßig geradlinige Bewegung des Fahrzeugs. Diese Annahme kann vorzugsweise durch Fahrzeugbewegungsparameter als Kontextwissen bestätigt werden. Unter dieser Voraussetzung werden die Einzelbilder, bevorzugt die transformierten Einzelbilder, aus der Sequenz gemittelt, um ein Durchschnittsbild zu erhalten. Um Speicherplatz zu minimieren oder jüngere Ereignisse höher zu gewichten, ist auch die Berechnung eines gleitenden Mittelwertes möglich. Anschließend wird zwischen jedem Bildpunkt im Durchschnittsbild und dem dazugehörigen Spaltenmittelwert die absolute Differenz oder die quadratische Differenz gebildet.

Das Extrahieren von Merkmalen des Durchschnittsbildes kann unter Berücksichtigung der Spaltenmittelwerte erfolgen, wobei vorzugsweise ein " Bag-of-Visual-Words "-Ansatz angewandt wird, bei welchem auf Basis eines Histogramms das Vorkommen bestimmter prototypischer Werte oder Wertetupel erfasst wird. Das entstandene Bild kann verwendet werden, um das Vorhandensein von spiegelnden Reflexionen zu bewerten, wie beispielsweise durch statistische Momente oder in einer besonders vorteilhaften Form durch lokale Merkmale (vorzugsweise " Local Binary Pattern ") in einem " Bag-of-Visual-Words "-Ansatz. Grundlage dieses approximativen Ansatzes ist die erfindungsgemäße Annahme, dass passierte Regionen auf der Fahrbahn im Falle von diffuser Reflexion dem Spaltenmittelwert bei geradliniger Bewegung sehr ähnlich sind. wohingegen bei spiegelnden Reflexionen die Veränderung des Erscheinungsbildes der passierten Regionen starke Unterschiede zu den Spaltenmittelwerten aufweisen.

Dieses Verfahren basiert - wie vorstehend erwähnt - im Wesentlichen auf der Annahme, dass das Fahrzeug eine geradlinige Bewegung ausführt. Bei Kurvenfahrt kann der betrachtete Bildbereich durch Drehung oder/oder Scherung entsprechend angepasst werden, dieses um sicher zu stellen, dass sich die Effekte auch bei Kurvenfahrt noch spaltenweise auswirken. Sozusagen werden bei diesem Ansatz nicht die Einzelregionen direkt verfolgt, um deren Erscheinungsbildänderung zu bewerten, sondern es wird deren zurückgelegter Pfad (Bildspalten) analysiert. Ein Vorteil dieses Verfahrens ist die Robustheit gegenüber nicht registrierten Fahrzeugbewegungen (Nicken/Wanken), welche besonders sicher fehlerfreie Schätzungen liefert. Ein weiterer Vorteil ist die benötigte Rechenzeit, die sich im Gegensatz zu ersterem Verfahren stark reduziert. Die Berechnungen beschränken sich dabei auf die Mittelwertbildung und einige Subtraktionen.

Weiterhin erfolgt bevorzugt ein Einbeziehen von Kameraparametern in das Bewerten der Veränderung der Erscheinungsbilder. Dadurch kann die Robustheit des Verfahrens gesteigert werden. Vorzugsweise wird die sich ständig verändernde Belichtungszeit berücksichtigt, welche Veränderungen im Erscheinungsbild der Regionen in der Sequenz (bspw. Helligkeitsveränderungen) verursacht und die Detektion von Reflexionen negativ beeinflussen kann.

Die erfindungsgemäße Vorrichtung zur Erkennung und Bewertung von Reflexionen wenigstens eines Punktes auf einer Fahrbahn nach Anspruch 12 umfasst eine Monokamera, welche dazu eingerichtet ist, mindestens zwei digitale Bilder des wenigstens einen Fahrbahnpunktes aus unterschiedlichen Aufnahme-Perspektiven zu erzeugen. Die Vorrichtung ist dabei dazu eingerichtet, unter Verwendung von Algorithmen digitaler Bildverarbeitung Unterschiede in den Erscheinungsbildern des wenigstens einen Fahrbahnpunktes zu bewerten und dadurch diffuse Reflexionen und spiegelnde Reflexionen der Fahrbahn zu detektieren und in Abhängigkeit der detektierten Reflexion eine

Fahrbahnzustands-Information zu ermitteln.

Bezüglich der Vorteile und vorteilhaften Ausführungsformen der erfindungsgemäßen Vorrichtung wird zur Vermeidung von Wiederholungen auf die vorstehenden Ausführungen im Zusammenhang mit dem erfindungsgemäßen Verfahren verwiesen, wobei die erfindungsgemäße Vorrichtung die dazu notwendigen Elemente aufweisen bzw. in erweiterter Weise dazu eingerichtet sein kann.

Schließlich umfasst das erfindungsgemäße Fahrzeug nach Anspruch 13 die vorstehend genannte erfindungsgemäße Vorrichtung.

### Kurze Beschreibung der Figuren

Im Folgenden werden Ausführungsbeispiele der Erfindung anhand der Zeichnung näher erläutert. Hierbei zeigt:

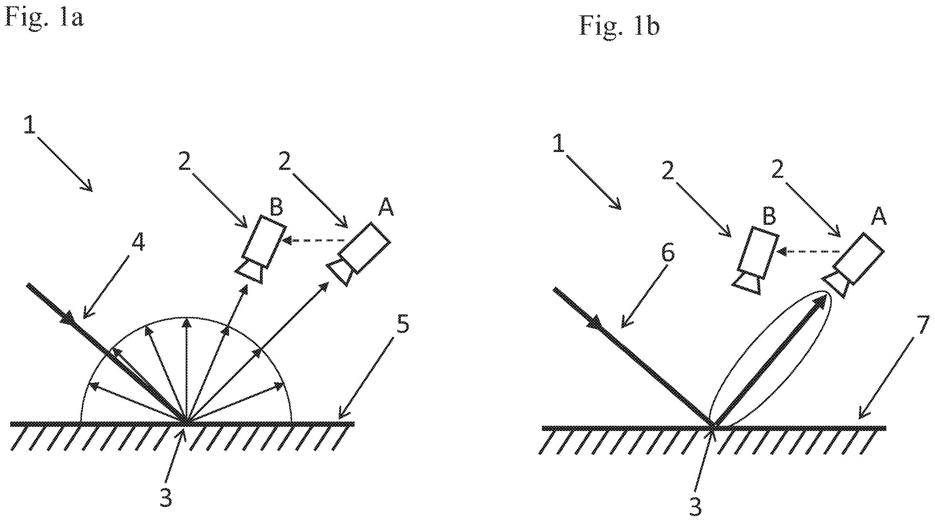

Fig. 1a und b eine schematische Darstellung eines Ausführungsbeispiels einer erfindungsgemäßen Vorrichtung während der Durchführung eines Ausführungsbeispiels des erfindungsgemäßen Verfahrens.

### Detaillierte Beschreibung von Ausführungsbeispielen

Die durch Fig. 1a und 1b gezeigte erfindungsgemäße Vorrichtung 1 umfasst eine digitale Kamera 2, welche dazu eingerichtet ist, wenigstens zwei digitale Bilder eines Fahrbahnpunktes 3 aus unterschiedlichen Aufnahme-Perspektiven aufzunehmen, wobei die unterschiedlichen Aufnahme-Perspektiven durch jeweils zwei unterschiedliche Stellungen A und B der jeweiligen Kamera 2 dargestellt sind.

Die Kamera 2 ist in einem nicht dargestellten Fahrzeug angeordnet, und zwar hinter dessen Windschutzscheibe, so dass einer visuellen Wahrnehmung eines Fahrers des Fahrzeugs entsprechend das Vorfeld des Fahrzeugs erfasst werden kann. Durch eine Fahrbewegung des Fahrzeugs wird dieses aus einer ersten Position in eine zweite Position bewegt. In der ersten Position, in welcher die Kamera 2 die in Fig. 1a und 1b jeweils rechts dargestellte Aufnahme-Perspektive A abdeckt, wird jeweils ein erstes Bild des Fahrbahnpunktes 3 aufgenommen. Das Fahrzeug wird in die zweite Position verfahren, in welcher die Aufnahme-Perspektive der Kamera 2 derart kompensiert wird, dass die in Fig. 1a und 1b jeweils links dargestellte Aufnahme-Perspektive B abdeckt wird, aus welcher jeweils ein zweites Bild des Fahrbahnpunktes (3) aufgenommen wird.

Wie aus Fig. 1a ersichtlich, ändert sich das Bild des Fahrbahnpunktes 3 nicht bei der Veränderung der Aufnahme-Perspektive von A nach B, weil ein eintreffender Lichtstrahl 4 in alle Richtungen gleichermaßen von einer trockenen Fahrbahnoberfläche 5 reflektiert wird. Dies entspricht einer diffusen Reflexion, welche ein Indikator für eine trockene Fahrbahnoberfläche ist. Die Vorrichtung 1 vergleicht das erste und zweite Bild miteinander. Unter Verwendung von Algorithmen digitaler Bildverarbeitung erkennt die Vorrichtung 1, dass das erste und das zweite Bild nicht oder nur in einem Umfang voneinander abweichen, dass eine diffuse Reflexion vorliegen muss. Aufgrund der erkannten bzw. detektierten diffusen Reflexion ermittelt die Vorrichtung 1 eine Fahrbahnzustands-Information, welche beinhaltet, dass die Fahrbahnoberfläche 5 trocken ist. Dieser Wert wird an ein nicht dargestelltes Fahrerassistenzsystem übermittelt.

Dahingegen ändert sich, wie aus Fig. 1b ersichtlich, das Bild des Fahrbahnpunktes 3 bei der Veränderung der Aufnahme-Perspektive von A nach B, weil ein eintreffender Lichtstrahl 6 in nur eine bestimmte Richtung von einer vereisten oder nassen Fahrbahnoberfläche 7 reflektiert wird. Dies entspricht einer spiegelnden Reflexion, welche ein Indikator für eine nasse oder vereiste Fahrbahnoberfläche ist. Die Vorrichtung 1 vergleicht das erste und zweite Bild miteinander. Unter Verwendung von Algorithmen digitaler Bildverarbeitung erkennt die Vorrichtung, dass das erste und das zweite Bild derart stark voneinander abweichen, dass eine spiegelnde Reflexion vorliegen muss. Aufgrund der erkannten bzw. detektierten spiegelnden Reflexion ermittelt die Vorrichtung eine Fahrbahnzustands-Information, welche beinhaltet, dass die Fahrbahnoberfläche nass bzw. vereist ist. Dieser Wert wird an ein nicht dargestelltes Fahrerassistenzsystem übermittelt, welches Warn- und Eingriffszeitpunkte an die nasse oder vereiste Fahrbahnoberfläche anpasst.

## Patentansprüche

1. Verfahren zur Erkennung und Bewertung von Reflexionen wenigstens eines Punktes (3) auf einer Fahrbahn (5, 7), umfassend die Verfahrensschritte:
- Bereitstellen einer Monokamera (2);
- Erzeugen mindestens zweier digitaler Bilder des wenigstens einen Fahrbahnpunktes (3) mittels der Monokamera (2), wobei das Erzeugen der Bilder aus unterschiedlichen Aufnahme-Perspektiven (A, B) der Monokamera (2) erfolgt;
- Verwendung von Algorithmen digitaler Bildverarbeitung zur:
- Mittelung der mindestens zwei erzeugten Bilder um ein Durchschnittsbild zu erhalten;
- Bilden einer absoluten Differenz oder einer quadratischen Differenz zwischen jedem Bildpunkt in dem Durchschnittsbild und einem zugehörigen Spaltenmittelwert;
- Unterscheiden von diffuser Reflexion und spiegelnder Reflexion der Fahrbahn (5, 7) durch Bewerten der absoluten Differenz oder der quadratischen Differenz des wenigstens einen Fahrbahnpunktes (3) in den mindestens zwei digitalen Bildern, wobei eine geradlinige Bewegung angenommen wird, so dass im Falle von diffuser Reflexion passierte Regionen auf der Fahrbahn dem Spaltenmittelwert sehr ähnlich sind, wohingegen bei spiegelnden Reflexionen die Veränderung des Erscheinungsbildes der passierten Regionen starke Unterschiede zu den Spaltenmittelwerten aufweisen und
- Ermitteln einer Fahrbahnzustands-Information in Abhängigkeit der detektierten Reflexion.

2. Verfahren nach Anspruch 1, ferner umfassend
- Unterscheiden von trockenem und nassem/vereistem Fahrbahnzustand, wobei eine diffuse Reflexion ein Indikator für eine trockene Fahrbahn und eine spiegelnde Reflexion ein Indikator für eine nasss und/oder vereiste Fahrbahn ist.

3. Verfahren nach Anspruch 1 und 2, ferner umfassend
- Unterscheiden von diffuser und spiegelnder Reflexion auf Basis digitaler Bildverarbeitung durch Differenzieren von fahrbahnfesten und fahrbahnunabhängigen Erscheinungen verursacht durch Relativbewegung der Kamera (2) somit
- sichere Trennung von Schatten und gespiegelter Infrastruktur auf der Fahrbahn.

4. Verfahren nach einem der vorstehenden Ansprüche, ferner umfassend
- Kommunizieren der Fahrbahnzustands-Information an ein Fahrerassistenzsystem eines Fahrzeugs und
- Anpassen von Warn- und Eingriffszeitpunkten mittels des Fahrerassistenzsystems in Abhängigkeit der Fahrbahnzustands-Information.

5. Verfahren nach einem der vorstehenden Ansprüche, ferner umfassend
- Einbeziehen der Fahrbahnzustands-Information in die Funktion eines automatisierten Fahrzeugs und
- Anpassen von Fahrstrategie und Bestimmung von Übergabezeitpunkten zwischen einem Automaten und Fahrer in Abhängigkeit der Fahrbahnzustands-Information.

6. Verfahren einem der vorstehenden Ansprüche, ferner umfassend
- Erzeugen mindestens zweier digitaler Bilder einer Vielzahl von Fahrbahnpunkten (3), welche eine trapezförmige Region bilden, aus unterschiedlichen Perspektiven (A, B) mittels der Monokamera (2) und
- Transformieren der trapezförmigen Region mittels einer geschätzten Homographie in eine rechtwinklige Draufsicht.

7. Verfahren nach einem der vorstehenden Ansprüche, ferner umfassend
- Bereitstellen der Monokamera (2) in einem Fahrzeug;
- Erzeugen des ersten Bildes in einer ersten Position des Fahrzeugs aus einer ersten Aufnahme-Perspektive (A);
- Bewegen des Fahrzeugs in eine zweite Position, welche von der ersten Position unterschiedlich ist;
- Erzeugen des mindestens zweiten Bildes in einer mindestens zweiten Position des Fahrzeugs aus einer mindestens zweiten Aufnahme-Perspektive (B);
- Transformation der mindestens zwei Bilder der mindestens zwei unterschiedlichen Aufnahme-Perspektiven (A und B) in eine jeweilige Draufsicht;
- Registrieren der mindestens zwei erzeugten Draufsichten mit Mitteln der digitalen Bildverarbeitung unter Einbeziehung von Fahrdynamikparametern des Fahrzeugs;
- Vergleich der Erscheinungsbilder des wenigstens einen Fahrbahnpunktes (3) in den mindestens zwei registrierten Draufsichten.

8. Verfahren nach einem der vorstehenden Ansprüche, ferner umfassend
- Extrahieren von Merkmalen des mindestens einen Fahrbahnpunktes (3) oder der Region, welche die Veränderung des Erscheinungsbildes in den mindestens zwei registrierten Draufsichten erfassen.

9. Verfahren nach Anspruch 8, ferner umfassend
- Bilden eines Merkmalsvektors aus den extrahierten Merkmalen und
- Zuweisen des Merkmalsvektors zu einer Klasse mittels eines Klassifikators.

10. Verfahren nach Anspruch 1 ferner umfassend
- Extrahieren von Merkmalen des Durchschnittsbildes unter Berücksichtigung der Spaltenmittelwerte, wobei vorzugsweise ein "Bag-of-Visual-Words"-Ansatz angewandt wird, bei welchem auf Basis eines Histogramms das Vorkommen bestimmter prototypischer Werte oder Wertetupel erfasst wird.

11. Verfahren nach einem der vorstehenden Ansprüche, ferner umfassend Einbeziehen von Kameraparametern in das Bewerten der Veränderung der Erscheinungsbilder.

12. Vorrichtung (1) zur Erkennung und Bewertung von Reflexionen wenigstens eines Punktes (3) auf einer Fahrbahn (5, 7), umfassend eine Monokamera (2), welche dazu eingerichtet ist, mindestens zwei digitale Bilder des wenigstens einen Fahrbahnpunktes (3) aus unterschiedlichen Aufnahme-Perspektiven (A, B) zu erzeugen, wobei die Vorrichtung (1) dazu eingerichtet ist,
- unter Verwendung von Algorithmen digitaler Bildverarbeitung:
- die mindestens zwei erzeugten Bilder zu mitteln, um ein Durchschnittsbild zu erhalten;
- eine absolute Differenz oder eine quadratische Differenz zwischen jedem Bildpunkt in dem Durchschnittsbild und einem zugehörigen Spaltenmittelwert zu bilden
- Unterschiede in der absoluten Differenz oder der quadratischen Differenz des wenigstens einen Fahrbahnpunktes (3) zu bewerten, wobei eine geradlinige Bewegung angenommen wird, so dass im Falle von diffuser Reflexion passierte Regionen auf der Fahrbahn dem Spaltenmittelwert sehr ähnlich sind, wohingegen bei spiegelnden Reflexionen die Veränderung des Erscheinungsbildes der passierten Regionen starke Unterschiede zu den Spaltenmittelwerten aufweisen und dadurch diffuse Reflexionen und spiegelnde Reflexionen der Fahrbahn zu detektieren und
- in Abhängigkeit der detektierten Reflexion eine Fahrbahnzustands-Information zu ermitteln.

13. Fahrzeug umfassend eine Vorrichtung (1) nach Anspruch 12

## Claims

1. Method for detecting and assessing reflections of at least one point (3) on a road (5, 7), comprising the method steps of:
- providing a mono camera (2);
- generating at least two digital images of the at least one road point (3) by means of the mono camera (2), wherein the generating of the images is effected from different recording perspectives (A, B) of the mono camera (2);
- using algorithms of digital image processing for:
- averaging the at least two generated images to obtain an average image;
- forming an absolute difference or a squared difference between each image point in the average image and an associated column mean value;
- distinguishing diffuse reflection and specular reflection of the road (5, 7) by assessing the absolute difference or the squared difference of the at least one road point (3) in the at least two digital images, wherein a straight-line movement is assumed, so that, in the case of diffuse reflection, regions on the road that have been passed are very similar to the column mean value, whereas, in the case of specular reflections, the change of the appearance of the regions that have been passed exhibit great differences with respect to the column mean values, and
- ascertaining road state information in dependence on the detected reflection.

2. Method according to Claim 1, furthermore comprising
- distinguishing a dry and wet/icy road state, wherein a diffuse reflection is an indicator of a dry road and a specular reflection is an indicator of a wet and/or icy road.

3. Method according to Claim 1 and 2, furthermore comprising
- distinguishing diffuse and specular reflection on the basis of digital image processing by differentiating road-fixed and road-independent appearances caused by a relative movement of the camera (2), and
- reliable separation of shadows and reflected infrastructure on the road.

4. Method according to one of the preceding claims, furthermore comprising
- communicating the road state information to a driver assistance system of a vehicle, and
- adapting warning and intervention time points by means of the driver assistance system in dependence on the road state information.

5. Method according to one of the preceding claims, furthermore comprising
- including the road state information in the function of an automated vehicle, and
- adapting driving strategy and determination of handover time points between an automatic system and the driver in dependence on the road state information.

6. Method according to one of the preceding claims, furthermore comprising
- generating at least two digital images of a multiplicity of road points (3), which form a trapezoidal region, from different perspectives (A, B) by means of the mono camera (2), and
- transforming the trapezoidal region by means of an estimated homography into a rectangular bird's-eye view.

7. Method according to one of the preceding claims, furthermore comprising
- providing the mono camera (2) in a vehicle;
- generating the first image in a first position of the vehicle from a first recording perspective (A);
- moving the vehicle into a second position, which differs from the first position;
- generating the at least second image in an at least second position of the vehicle from an at least second recording perspective (B);
- transforming the at least two images of the at least two different recording perspectives (A and B) into a respective bird's-eye view;
- registering the at least two generated bird's-eye views with means of digital image processing taking into account driving dynamic parameters of the vehicle;
- comparing the appearances of the at least one road point (3) in the at least two registered bird's-eye views.

8. Method according to one of the preceding claims, furthermore comprising
- extracting features of the at least one road point (3) or of the region that capture the change in the appearance in the at least two registered bird's-eye views.

9. Method according to Claim 8, furthermore comprising
- forming a feature vector from the extracted features, and
- assigning the feature vector to a class by means of a classifier.

10. Method according to Claim 1, furthermore comprising
- extracting features of the average image taking into account the column mean values, wherein preferably a "bag-of-visual-words" approach is applied in which the occurrence of specific prototypical values or value tuples is captured on the basis of a histogram.

11. Method according to one of the preceding claims, furthermore comprising
taking into account camera parameters in the assessment of the change in the appearances.

12. Apparatus (1) for detecting and assessing reflections of at least one point (3) on a road (5, 7), comprising a mono camera (2), which is configured to generate at least two digital images of the at least one road point (3) from different recording perspectives (A, B), wherein the apparatus (1) is configured,
- using algorithms of digital image processing:
- for averaging the at least two generated images to obtain an average image;
- for forming an absolute difference or a squared difference between each image point in the average image and an associated column mean value,
- for assessing differences in the absolute difference or the squared difference of the at least one road point (3), wherein a straight-line movement is assumed, so that, in the case of diffuse reflection, regions on the road that have been passed are very similar to the column mean value, whereas, in the case of specular reflections, the change in the appearance of the regions that have been passed exhibit great differences with respect to the column mean values, and consequently detecting diffuse reflections and specular reflections of the road, and
- ascertaining road state information in dependence on the detected reflection.

13. Vehicle comprising an apparatus (1) according to Claim 12.

## Revendications

1. Procédé de détection et d'évaluation de réflexions d'au moins un point (3) sur une route (5, 7), le procédé comprenant les étapes suivantes :
- fournir une mono-caméra (2) ;
- générer au moins deux images numériques de l'au moins un point de route (3) au moyen de la mono-caméra (2), les images étant générées à partir de différentes perspectives d'enregistrement (A, B) de la mono-caméra (2) ;
- utiliser des algorithmes de traitement d'images numériques pour :
- faire la moyenne des au moins deux images générées afin d'obtenir une image moyenne ;
- former une différence absolue ou une différence quadratique entre chaque pixel de l'image moyenne et une valeur moyenne de colonne associée ;
- faire la différence entre la réflexion diffuse et la réflexion spéculaire de la route (5, 7) par évaluation de la différence absolue ou de la différence quadratique de l'au moins un point de route (3) dans les au moins deux images numériques, un mouvement rectiligne étant supposé de sorte que, en cas de réflexion diffuse, des régions passées sur la route sont très similaires à la valeur moyenne de colonne, tandis que, en cas de réflexions spéculaires, le changement d'aspect des régions passées montre de fortes différences par rapport aux valeurs moyennes de colonne et
- déterminer une information sur l'état de la route en fonction de la réflexion détectée.

2. Procédé selon la revendication 1, comprenant en outre l'étape suivante
- faire la différence entre l'état de route sèche et l'état de route mouillée/verglacée, une réflexion diffuse étant un indicateur d'une surface de route sèche et une réflexion spéculaire étant un indicateur d'une surface de route mouillée et/ou verglacée.

3. Procédé selon la revendication 1 et 2, comprenant en outre les étapes suivantes
- faire la différence entre une réflexion diffuse et une réflexion spéculaire sur la base du traitement d'image numérique par une différence faite entre des phénomènes liés à la route et des phénomènes indépendants de la route qui sont dus au mouvement relatif de la caméra (2),
- séparer ainsi de manière fiable l'ombre et l'infrastructure en miroir sur la route.

4. Procédé selon l'une des revendications précédentes, comprenant en outre les étapes suivantes
- communiquer l'information sur l'état de la route à un système d'aide à la conduite d'un véhicule et
- adapter des instants d'avertissement et d'intervention au moyen du système d'aide à la conduite en fonction de l'information sur l'état de la route.

5. Procédé selon l'une des revendications précédentes, comprenant en outre les étapes suivantes
- inclure l'information sur l'état de la route dans la fonction d'un véhicule automatisé et
- adapter la stratégie de conduite et déterminer des instants de transfert entre une machine automatique et le conducteur en fonction de l'information sur l'état de la route.

6. Procédé selon l'une des revendications précédentes, comprenant en outre les étapes suivantes
- générer au moins deux images numériques d'un grand nombre de points de route (3), qui forment une région trapézoïdale, à partir de différentes perspectives (A, B) au moyen de la mono-caméra (2} et
- transformer la région trapézoïdale en une vue de dessus perpendiculaire au moyen d'une homographie estimée.

7. Procédé selon l'une des revendications précédentes, comprenant en outre les étapes suivantes
- fournir la mono-caméra (2) dans un véhicule ;
- générer la première image dans une première position du véhicule à partir d'une première perspective d'enregistrement (A) ;
- déplacer le véhicule dans une deuxième position qui est différente de la première position ;
- générer l'au moins une deuxième image dans une au moins deuxième position du véhicule à partir d'au moins une deuxième perspective d'enregistrement (B) ;
- transformer les au moins deux images des au moins deux perspectives d'enregistrement différentes (A et B) en une vue de dessus respective ;
- enregistrer les au moins deux vues de dessus générées avec des moyens du traitement d'image numérique avec prise en compte de paramètres de dynamique de conduite du véhicule ;
- comparer les aspects de l'au moins un point de route (3) dans les au moins deux vues de dessus enregistrées.

8. Procédé selon l'une des revendications précédentes, comprenant en outre l'étape suivante
- extraire des caractéristiques de l'au moins un point de route (3) ou de la région qui détectent le changement d'aspect dans les au moins deux vues de dessus enregistrées.

9. Procédé selon la revendication 8, comprenant en outre les étapes suivantes
- former un vecteur de caractéristiques à partir des caractéristiques extraites et
- affecter le vecteur de caractéristiques à une classe au moyen d'un classificateur.

10. Procédé selon la revendication 1, comprenant en outre l'étape suivante
- extraire des caractéristiques de l'image moyenne avec prise en compte des valeurs moyennes de colonne, une approche « sac de mots visuels » étant de préférence utilisée dans laquelle l'occurrence de valeurs prototypiques déterminées ou n-uplets de valeurs déterminées est détectée sur la base d'un histogramme.

11. Procédé selon l'une des revendications précédentes, comprenant en outre l'étape suivante
- prendre en compte des paramètres de caméra dans l'évaluation du changement d'aspects.

12. Dispositif (1) de reconnaissance et d'évaluation de réflexions d'au moins un point (3) sur une route (5, 7), le dispositif comprenant une mono-caméra (2) qui est adaptée pour générer au moins deux images numériques de l'au moins un point de route (3) à partir de différentes perspectives d'enregistrement (A, B), le dispositif (1) étant adapté pour
- à l'aide d'algorithmes de traitement d'images numériques :
- faire la moyenne des au moins deux images générées pour obtenir une image moyenne ;
- former une différence absolue ou une différence quadratique entre chaque pixel de l'image moyenne et une valeur moyenne de colonne associée
- évaluer des différences entre la différence absolue ou la différence quadratique de l'au moins un point de route (3), un mouvement rectiligne étant supposé de sorte que, en cas de réflexion diffuse, des régions passées sur la route sont très similaires à la valeur moyenne de colonne, tandis que, en cas de réflexions spéculaires, le changement d'aspect des régions passées montre de fortes différences par rapport aux valeurs moyennes de colonne et détecter ainsi des réflexions diffuses et des réflexions spéculaires de la route et
- déterminer une information sur l'état de la route en fonction de la réflexion détectée.

13. Véhicule comprenant un dispositif (1) selon la revendication 12.
